# EUROPÄISCHE PATENTSCHRIFT

(11) **EP 3 464 023 B1**
(45) Veröffentlichungstag und Bekanntmachung des Hinweises auf die Patenterteilung: **09.09.2020**
(21) Anmeldenummer: 17724030.6
(22) Anmeldetag: 17.05.2017
(51) Int. Cl.: B62D 5/04, F16H 25/24, F16H 57/021, F16H 1/16

(54) **ELEKTROMECHANISCHE SERVOLENKUNG MIT SCHWENKBAREM LAGER FÜR EIN SCHRAUBRADGETRIEBE**
ELECTROMECHANICAL POWER STEERING SYSTEM HAVING A PIVOTABLE BEARING FOR A HELICAL GEARING
DIRECTION ASSISTÉE ÉLECTROMÉCANIQUE À PALIER PIVOTANT POUR UN ENGRENAGE HÉLICOÏDAL

(30) Priorität: 23.05.2016 DE 102016006156
(43) Veröffentlichungstag der Anmeldung: 10.04.2019
(73) Patentinhaber: thyssenkrupp Presta AG, 9492 Eschen (LI); thyssenkrupp AG, 45143 Essen (DE)
(72) Erfinder: VONIER, Felix, 6780 Schruns (AT); KOHLER, Christian, 8888 Heiligkreuz (CH); LASS, Eugen, 9435 Heerbrugg (CH)
(74) Vertreter: thyssenkrupp Intellectual Property GmbH
(86) Internationale Anmeldenummer: PCT/EP2017/061831
(87) Internationale Veröffentlichungsnummer: WO 2017/202664

(56) Entgegenhaltungen:
- DE-A1-102008 001 878
- DE-A1-102008 056 024
- DE-U1- 20 221 954
- JP-A- 2006 111 133
- JP-A- 2011 157 034
- JP-A- 2013 208 933
- US-A1- 2013 025 960

## Beschreibung

Die vorliegende Erfindung betrifft eine elektromechanische Servolenkung mit den Merkmalen des Oberbegriffs des Anspruchs 1.

In elektromechanischen Servolenkungen wird über einen Elektromotor ein Drehmoment erzeugt, das auf ein Getriebe übertragen und dort dem vom Fahrer gestellten Lenkmoment überlagert wird.

Eine gattungsgemäße elektromechanische Servolenkung weist einen elektrischen Servomotor auf, der eine Schneckenwelle antreibt, die mit einem auf einer Lenkwelle angeordneten Schneckenrad kämmt, wobei das Schneckenrad mit einer Eingangswelle eines Lenkgetriebes in Wirkverbindung steht und wobei die Schneckenwelle und die Lenkwelle in einem gemeinsamen Getriebegehäuse drehbar gelagert sind.

Die DE 10 2008 001 878 A1 und die DE 10 2014 105 921 A1 offenbaren ein Schwenklager für ein Schneckengetriebe, wobei mittels eines kardanisch gelagerten Lagerrings die Schnecke gelagert wird. Der Lagerring weist dabei eine Schwenkachse auf, welche senkrecht zur Drehachse und in Richtung des Schneckenrads verläuft. Als nachteilig erweist sich diese Ausgestaltung, da die Kupplung stärker belastet wird, wodurch die Kupplung mit der Zeit schneller verschleißt und ein vergrößertes Zahnflankenspiel mit entsprechenden Vibrationsgeräuschen auftritt.

Aus der JP 2006 111133 A ist ein Schneckengetriebe bekannt, bei dem die Welle um eine Schwenkachse verschwenkbar gelagert ist, welche die Kupplung durchsetzt. Die Schwenkbewegung wird dabei durch ein elastisches Element ermöglicht, wodurch die Schwenkachse jedoch nicht eindeutig definiert ist. Ähnliche Anordnungen sind aus der JP 2013 208933 A bekannt.

Es ist deshalb Aufgabe der vorliegenden Erfindung eine elektromechanischen Servolenkung mit einem Schneckengetriebe anzugeben, bei dem die Schwenkbewegung besser bestimmt ist.

Diese Aufgabe wird von einer elektromechanischen Servolenkung mit den Merkmalen des Anspruchs 1 gelöst.

Demnach ist eine elektromechanische Servolenkung mit einem elektrischen Servomotor mit einer Motorwelle versehen, der eine mit einem Schraubrad kämmende Welle antreibt, wobei die Welle in einem Getriebegehäuse angeordnet und an ihrem motornahen Ende in einem Lager um eine Drehachse drehbar gelagert ist, und wobei die Motorwelle über eine einen Achsversatz ausgleichende Kupplung mit der Welle drehfest gekoppelt ist, wobei die Welle außerdem um eine senkrecht zur Drehachse liegende Schwenkachse verschwenkbar gelagert ist, wobei die Schwenkachse im Bereich der Kupplung angeordnet ist und die Kupplung durchsetzt, wobei das Lager ein Wälzlager ist, welches in einem das Lager haltenden Träger angeordnet ist, wobei erfindungsgemäß die Schwenkachse, um die der Träger, das Lager und die Welle schwenkbar in dem Getriebegehäuse gelagert sind, von zwei in dem Getriebegehäuse angeordneten und auf der Schwenkachse liegenden Stiften definiert ist.

Der Achsversatz zwischen der Welle und der Motorwelle verläuft achsparallel und/oder in zueinander winkligen Achsen. Weil erfindungsgemäß die Welle außerdem um eine senkrecht zur Drehachse liegende Schwenkachse verschwenkbar gelagert ist, wobei die Schwenkachse im Bereich der Kupplung angeordnet ist und die Kupplung durchsetzt und somit die Lagerung die Schwenkachse nahe an der Kupplung liegt, wird die Belastung der Kupplung im Betrieb reduziert.

Das Lager weist ein Wälzlager auf, das die Welle drehbar um die Drehachse lagert, wobei das Lager in einem Träger angeordnet ist. Die Verschwenkung wird vorzugsweise durch zwei im Lager und im Getriebegehäuse angeordnete Stifte ermöglicht.

Dabei ist es bevorzugt, wenn ein Träger des Wälzlagers gegenüberliegende Bohrungen und das Getriebegehäuse entsprechend korrespondierende Ausnehmungen zur Aufnahme der Stifte aufweist.

Es ist vorteilhaft, wenn die Stifte Zylinderstifte sind und somit ein Schwenken des Lagers um die dadurch gebildete Schwenkachse erlauben.

Vorzugsweise liegt die Schwenkachse in etwa in der Mitte der Kupplung. Dabei kann bevorzugt die Schwenkachse exakt durch eine Kupplungsschwenkachse der Kupplung verlaufen.

In einer bevorzugten Ausführungsform ist der Träger des Wälzlagers topfartig ausgebildet und weist einen Topfrand auf, der einen Innenring des Wälzlagers in Richtung der Kupplung axial überragt.

Für die Schwenkachse liegen die Bohrungen vorzugsweise im Bereich des Topfrands.

Es ist bevorzugt, wenn in den Ausnehmungen im Getriebegehäuse eine Gleitlagerung, beispielsweise mit Gleitbuchsen zur Aufnahme der Stifte vorgesehen ist.

Weiterhin bevorzugt ist das Schraubrad ein Schneckenrad und die Welle eine Schneckenwelle eines Schneckengetriebes.

Dabei kann das Schneckenrad mit einer Eingangswelle eines Lenkgetriebes in Wirkverbindung stehen und das Schneckenrad auf einer Lenkwelle angeordnet sein.

Die Kupplung zwischen der Motorwelle und der Welle des Getriebes weist bevorzugt zwei ineinandergreifende Kupplungsteile auf, die jeweils über eine Lagerbuchse mit der entsprechenden Welle drehfest verbunden sind.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:
- Figur 1:: eine schematische Darstellung einer elektromechanischen Servolenkung;
- Figur 2:: das Getriebe der Servolenkung aus Figur 1 in einer perspektivischen Darstellung
- Figur 3:: das Getriebe der Figur 2 in einem Längsschnitt entlang der Schneckenwelle;
- Figur 4:: das Getriebe in einer weiteren perspektivischen Darstellung;
- Figur 5:: eine Draufsicht auf das Getriebe in Richtung der Schneckenwelle; sowie
- Figur 6:: eine Explosionszeichnung der erfindungsgemäßen Lagerung der Schneckenwelle.

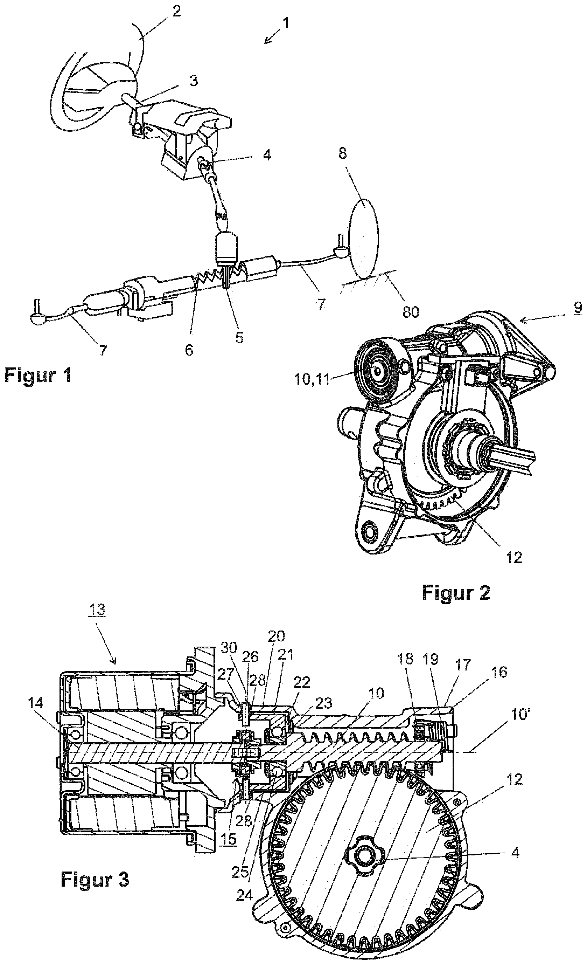

In der Figur 1 ist eine elektromechanische Kraftfahrzeuglenkung 1 mit einem Lenkrad 2, das mit einer oberen Lenkwelle 3 und einer unteren Lenkwelle 4 drehfest gekoppelt ist, schematisch dargestellt. Die obere Lenkwelle 3 steht über einen Torsionsstab in funktioneller Verbindung mit der unteren Lenkwelle 4. Die untere Lenkwelle 4 ist mit einem Ritzel 5 drehfest verbunden. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3, 4 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor einer Servoeinheit ist vorgesehen, um dem Fahrer bei dieser Lenkbewegung zu unterstützen. Die Servoeinheit kann dabei als Überlagerungslenkung an der Lenksäule oder als Hilfskraftunterstützungseinrichtung an dem Ritzel oder der Zahnstange angeordnet sein.

In der Figur 2 ist das Getriebe 9 der Servoeinheit dargestellt. Ein nicht dargestellter Servomotor treibt eine Schneckenwelle 10 an, die mit ihrer Schnecke 11 in Eingriff mit einem Schneckenrad 12 steht, dass mit der unteren Lenkwelle 4 oder dem Ritzel 5 drehfest verbunden ist. Bei einem Betrieb des Elektromotors 13 wird die Schneckenwelle 10 angetrieben und die Schnecke 11 und das Schneckenrad 12 drehen sich entsprechend um eine Drehunterstützung für die untere Lenkwelle 4 bereitzustellen oder ein Unterstützungsmoment unmittelbar in das Ritzel 5 einzuleiten.

In Figur 3 ist in einem Längsschnitt das Getriebe 9 dargestellt. Der Längsschnitt verläuft dabei entlang einer Drehachse 10' der Schneckenwelle 10, die von dem Elektromotor 13 angetrieben ist. Der Elektromotor 13 verfügt über eine Motorwelle 14, die über eine Kupplung 15 mit der Schneckenwelle 10 drehfest gekoppelt ist.

Derartige Kupplungen 15 können Fluchtungsfehler der Achsen ausgleichen, also Winkelabweichungen, die im Betrieb oder bei der Montage auftreten können. Es können auch Kupplungen vorgesehen sein, die einen Parallelversatz der gekoppelten Achsen ausgleichen können, beispielsweise sogenannte "Oldhamkupplungen". Bevorzugt ist die Kupplung 15 in der Lage, die beiden genannten Fehler auszugleichen.

Die Kupplung 15 besteht vorzugsweise aus zwei ineinandergreifenden Kupplungsteilen mit einem konzentrischen Lagersitz, wobei der Eingriff der Kupplungsteile Spiel aufweist. Die Kupplungsteile sind durch jeweils eine in dem Lagersitz angeordnete zylindrische Lagerbuchse formschlüssig mit der entsprechenden Welle verbunden. Die Kupplungsteile sind dabei axial durch eine konzentrisch angeordnete Schraubenfeder vorgespannt, die zwischen den Kupplungsteilen in den Lagerbuchsen angeordnet ist. Die gezeigte Kupplung 15 ist drehfest und durch das Spiel des Eingriffs der Kupplungsteile kann ein Achsversatz oder Fluchtungsfehler zwischen der Drehachse der Motorwelle 14 und der Drehachse der Schneckenwelle 10 ausgeglichen werden.

Die Schneckenwelle 10 kämmt über die Schneckenverzahnung mit dem Schneckenrad 12. Das Schneckenrad 12 wiederum ist drehfest mit beispielsweise einer Lenkwelle 4 verbunden, die zwischen einem nicht dargestellten Lenkrad und dem eigentlichen Lenkgetriebe des Kraftfahrzeugs verläuft. Die genannten Bauelemente sind in einem gemeinsamen Getriebegehäuse 16 gelagert.

Die Lagerung der Schneckenwelle 10 in dem Getriebegehäuse 16 erfolgt an einem motorfernen Ende 17 der Schneckenwelle 10 in einem Wälzlager 18, welches als Kugellager ausgebildet ist und geringfügige Axialbewegungen und geringfügige Änderungen der Drehachse der Schneckenwelle 10 gegenüber dem Getriebegehäuse 16 zulässt. Die Lage der Schneckenwelle 10 ist in Bezug auf das Schneckenrad 12 mittels einer Vorspanneinrichtung 19 einstellbar. Die Einstellung erfolgt dabei bevorzugt auf der motorfernen Seite 17 der Schneckenwelle 10.

Die Schneckenwelle 10 weist weiter ein motornahes Ende 20 auf, welches in einer schwenkbaren Lageranordnung gelagert ist. Die Lageranordnung weist ein Wälzlager 22 mit einem Innenring 23, Wälzkörpern 24 und einem Außenring auf. Die Wälzkörper 24 laufen in Rillen zwischen dem Innenring 23 und dem Außenring. Der Außenring ist gehalten von einem Träger 25, der mittels Zylinderstiften 26 in dem Getriebegehäuse 16 befestigt ist. Insbesondere kann der Außenring auch mit dem Träger 25 einstückig ausgebildet sein, wie dies in der Zeichnung dargestellt ist.

Das Getriebegehäuse 16 weist im Bereich der flexiblen Kupplung 15 einander gegenüberliegende, miteinander fluchtende Ausnehmungen 27 zur Aufnahme von Gleitbuchsen 28 auf. Der Träger 25 des Wälzlagers 22 weist zu den Ausnehmungen 27 korrespondierende Durchbrüche bzw. Bohrungen 29 auf. Die beiden Zylinderstifte 26 durchsetzen jeweils eine Bohrung 29 im Träger 25 und sind von der Gleitbuchse 28 im Getriebegehäuse 16 aufgenommen. Die Zylinderstifte 26 ermöglichen somit ein Schwenken des Lagers 21 bzw. des Wälzlagers 22 und bilden somit eine Schwenkachse 30 für die Schneckenwelle 10. Die Schwenkachse 30 liegt bevorzugt in der Mitte der Kupplung 15, bzw. verläuft durch die Kupplungsschwenkachse. Der Lageraußenring 25 ist topfförmig ausgebildet, wobei die Bohrungen 29 im Bereich des Topfrandes angeordnet sind und die Rillen für die Wälzkörper 24 im Topfboden ausgeformt sind. Durch die topfförmige Ausgestaltung kann die Schwenkachse 30 des Lagers 21 so nah wie möglich an die Kupplungsschnittstelle rücken. Der Träger 25 weist dabei auf der Außenseite, der kugelfernen Seite, bevorzugt eine Höhe auf, die mindestens doppelt so hoch ist, wie die Höhe des Lagerinnenrings 23 auf der kugelfernen Seite.

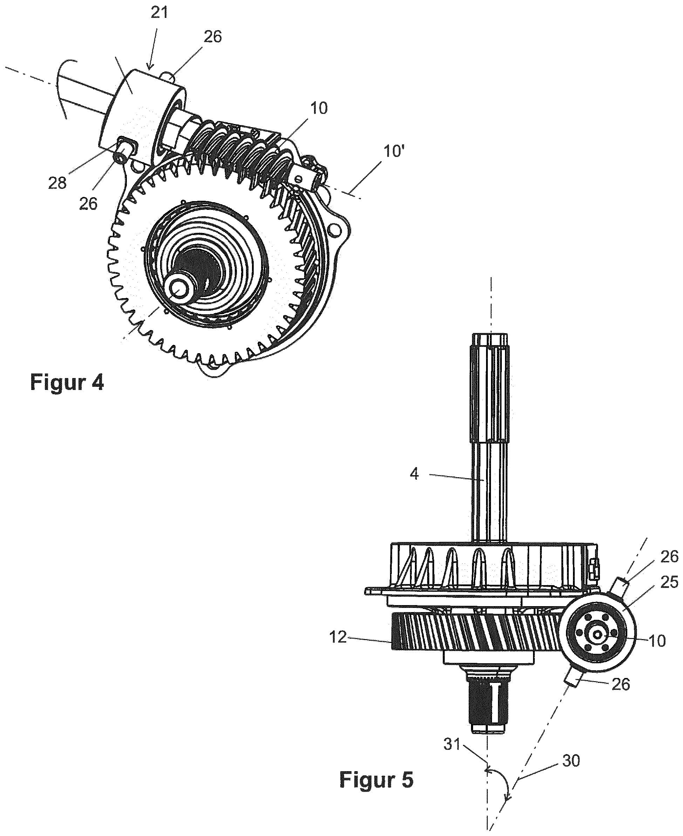

Die Figur 4 zeigt die Schneckenwelle 10 mit dem kardanischen Lager 21, dem Träger 25 und den Zylinderstiften 26 sowie das mit der Schneckenwelle 10 kämmende Schneckenrad 12 in einer perspektivischen Darstellung, wobei auf die Komponenten des Getriebegehäuses und des Elektromotors verzichtet wurde.

In Figur 5 ist ersichtlich, dass die durch die Stifte 26 vorgegebene Schwenkachse 30 der Schneckenwelle 10 einen definierten Winkel zur Drehachse 31 des Schneckenrads 12 bzw. der Lenkwelle 4 aufweist. Dieser Winkel hängt von der Positionierung / Orientierung des Schwenkhebels ab und ist wichtig für ein unabhängig von der Lenkrichtung vorliegendes gleiches Durchdrehmoment.

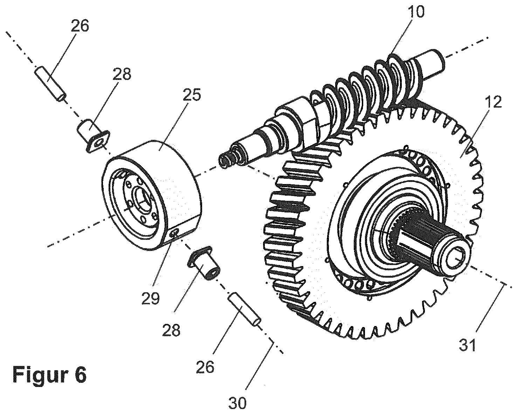

Fig. 6 zeigt die Einzelheiten des Lagers 21 in einer Explosionsdarstellung. Neben der Schneckenwelle 10 und dem im Eingriff stehenden Schneckenrad 12, ist der Lageraußenring 25 mit seinen Bohrungen 29 dargestellt. Die Zylinderstifte 26 werden jeweils von einer Gleitbuchse 28 aufgenommen und durchsetzen eine entsprechende Bohrung 29 im Träger. Diese Anordnung eingesetzt im nicht dargestellten Getriebegehäuse bildet die Schwenkachse 30 aus.

Weil bei dem erfindungsgemäßen Lager 21 die Schwenkachse 30 der Schneckenwelle 10 im Bereich der Kupplung 15 verläuft, kann eine geringere Deachsierung zwischen Kupplung und Schneckenwelle gewährleistet werden. Die Belastung der Kupplung 15 wird dadurch verringert, was sich auf die Lebensdauer der Kupplung 15 und die Akustik positiv auswirkt. Eine zusätzliche Fixierung des Trägers 25 im Getriebegehäuse entfällt, wodurch Kosten eingespart werden können.

## Patentansprüche

1. Elektromechanische Servolenkung mit einem elektrischen Servomotor (13) mit einer Motorwelle (14), der eine mit einem Schraubrad (12) kämmende Welle (10) antreibt, wobei die Welle (10) in einem Getriebegehäuse (16) angeordnet und an ihrem motornahen Ende in einem Lager (21) um eine Drehachse (10') drehbar gelagert ist, und wobei die Motorwelle (14) über eine einen Achsversatz ausgleichende Kupplung (15) mit der Welle (10) drehfest gekoppelt ist, wobei die Welle (10) außerdem um eine senkrecht zur Drehachse (10') liegende Schwenkachse (30) verschwenkbar gelagert ist, wobei die Schwenkachse (30) im Bereich der Kupplung (15) angeordnet ist und die Kupplung (15) durchsetzt, wobei das Lager (21) ein Wälzlager (22) ist, welches in einem das Lager (21) haltenden Träger (25) angeordnet ist, **dadurch gekennzeichnet, dass** die Schwenkachse (30), um die der Träger (25), das Lager (21) und die Welle (10) schwenkbar in dem Getriebegehäuse (16) gelagert sind, von zwei in dem Getriebegehäuse (16) angeordneten und auf der Schwenkachse (30) liegenden Stiften (26) definiert ist.

2. Elektromechanische Servolenkung nach Anspruch 1, **dadurch gekennzeichnet, dass** der Träger (25) des Wälzlagers (22) gegenüberliegende Bohrungen (29) und das Getriebegehäuse (16) entsprechend korrespondierende Ausnehmungen (27) zur Aufnahme der Stifte (26) aufweist.

3. Elektromechanische Servolenkung nach Anspruch 2, **dadurch gekennzeichnet, dass** die Stifte (26) Zylinderstifte sind und ein Schwenken des Lagers (21) um die Schwenkachse (30) erlauben.

4. Elektromechanische Servolenkung nach einem der vorhergehenden Ansprüche, **dadurch gekennzeichnet, dass** die Schwenkachse (30) die Kupplung (16) mittig durchsetzt.

5. Elektromechanische Servolenkung nach einem der vorhergehenden Ansprüche 2 bis 6, **dadurch gekennzeichnet, dass** der Träger (25) des Wälzlagers (22) topfartig ausgebildet ist und mit einem Topfrand einen Innenring (23) des Wälzlagers (22) in Richtung der Kupplung (15) axial überragt.

6. Elektromechanische Servolenkung nach Anspruch 5, **dadurch gekennzeichnet, dass** die Bohrungen (29) im Bereich des Topfrands ausgebildet sind.

7. Elektromechanische Servolenkung nach einem der vorhergehenden Ansprüche, **dadurch gekennzeichnet, dass** in den Ausnehmungen (27) in dem Getriebegehäuse (16) Gleitbuchsen (28) zur Aufnahme der Stifte (26) vorgesehen sind.

8. Elektromechanische Servolenkung nach einem der vorhergehenden Ansprüche, **dadurch gekennzeichnet, dass** das Schraubrad (12) ein Schneckenrad und die Welle (10) eine Schneckenwelle ist.

9. Elektromechanische Servolenkung nach einem der vorhergehenden Ansprüche, **dadurch gekennzeichnet, dass** das Schneckenrad (12) mit einer Eingangswelle eines Lenkgetriebes in Wirkverbindung steht und das Schneckenrad (7) auf einer Lenkwelle angeordnet ist.

10. Elektromechanische Servolenkung nach einem der vorhergehenden Ansprüche, **dadurch gekennzeichnet, dass** die Kupplung (15) wenigstens zwei ineinandergreifende Kupplungsteile aufweist, die jeweils über eine Lagerbuchse mit der entsprechenden Welle drehfest verbunden sind.

## Claims

1. Electromechanical power steering system with an electric servomotor (13) with a motor shaft (14), which electric servomotor (13) drives a shaft (10) which meshes with a spiral toothed wheel (12), the shaft (10) being arranged in a gear mechanism housing (16) and being mounted at its end which is close to the motor in a bearing (21) such that it can be rotated about a rotational axis (10'), and the motor shaft (14) being coupled fixedly to the shaft (10) so as to rotate with it via a coupling (15) which compensates for an axial offset, the shaft (10) being mounted, moreover, such that it can be pivoted about a pivot axis (30) which lies perpendicularly with respect to the rotational axis (10'), the pivot axis (30) being arranged in the region of the coupling (15) and penetrating the coupling (15), the bearing (21) being an anti-friction bearing (22) which is arranged in a carrier (25) which holds the bearing (21), **characterized in that** the pivot axis (30), about which the carrier (25), the bearing (21) and the shaft (10) are mounted pivotably in the gear mechanism housing (16), is defined by two pins (26) which are arranged in the gear mechanism housing (16) and lie on the pivot axis (30).

2. Electromechanical power steering system according to Claim 1, **characterized in that** the carrier (25) of the anti-friction bearing (22) has bores (29) which lie opposite one another, and the gear mechanism housing (16) accordingly has corresponding recesses (27) for receiving the pins (26).

3. Electromechanical power steering system according to Claim 2, **characterized in that** the pins (26) are cylindrical pins and permit pivoting of the bearing (21) about the pivot axis (30).

4. Electromechanical power steering system according to one of the preceding claims, **characterized in that** the pivot axis (30) penetrates the coupling (16) centrally.

5. Electromechanical power steering system according to one of the preceding Claims 2 to 6, **characterized in that** the carrier (25) of the anti-friction bearing (22) is of pot-like configuration and protrudes axially with a pot edge beyond an inner ring (23) of the anti-friction bearing (22) in the direction of the coupling (15).

6. Electromechanical power steering system according to Claim 5, **characterized in that** the bores (29) are configured in the region of the pot edge.

7. Electromechanical power steering system according to one of the preceding claims, **characterized in that** sliding bushes (28) for receiving the pins (26) are provided in the recesses (27) in the gear mechanism housing (16).

8. Electromechanical power steering system according to one of the preceding claims, **characterized in that** the spiral toothed wheel (12) is a worm gear and the shaft (10) is a worm shaft.

9. Electromechanical power steering system according to one of the preceding claims, **characterized in that** the worm gear (12) is operatively connected to an input shaft of a steering gear, and the worm gear (7) is arranged on a steering shaft.

10. Electromechanical power steering system according to one of the preceding claims, **characterized in that** the coupling (15) has at least two coupling parts which engage into one another and are connected fixedly to the corresponding shaft so as to rotate with it in each case via a bearing bush.

## Revendications

1. Direction assistée électromécanique, comportant un servomoteur électrique (13) pourvu d'un arbre moteur (14) et entraînant un arbre (10) s'engrenant avec une roue à dents hélicoïdes (12), dans laquelle l'arbre (10) est disposé dans un carter de boîte de vitesses (16) et monté rotatif autour d'un axe de rotation (10') au niveau de son extrémité côté moteur sur un palier (21), et dans laquelle l'arbre moteur (14) est accouplé solidaire en rotation à l'arbre (10) par un accouplement (15) compensant un décalage axial, dans laquelle l'arbre (10) est en outre monté pivotant autour d'un axe de pivotement (30) perpendiculaire à l'axe de rotation (10'), dans laquelle l'axe de pivotement (30) est disposé au niveau de l'accouplement (15) et traverse l'accouplement (15), dans laquelle le palier (21) est un palier à roulement (22) qui est disposé dans un support (25) retenant le palier (21), **caractérisée en ce que** l'axe de pivotement (30) autour duquel le support (25), le palier (21) et l'arbre (10) sont montés pivotants dans le carter de boîte de vitesses (16) est défini par deux goupilles (26) disposées dans le carter de boîte de vitesses (16) et situées sur l'axe de pivotement (30).

2. Direction assistée électromécanique selon la revendication 1, **caractérisée en ce que** le support (25) du palier à roulement (22) comprend des perçages (29) opposés et le carter de boîte de vitesses (16) comprend des évidements (27) correspondants pour recevoir les goupilles (26).

3. Direction assistée électromécanique selon la revendication 2, **caractérisée en ce que** les goupilles (26) sont des goupilles cylindriques et permettent un pivotement du palier (21) autour de l'axe de pivotement (30) .

4. Direction assistée électromécanique selon l'une quelconque des revendications précédentes, **caractérisée en ce que** l'axe de pivotement (30) traverse l'accouplement (16) au centre.

5. Direction assistée électromécanique selon l'une quelconque des revendications précédentes 2 à 6, **caractérisée en ce que** le support (25) du palier à roulement (22) est réalisé en forme de pot et dépasse axialement par un bord de pot une bague intérieure (23) du palier à roulement (22) en direction de l'accouplement (15) .

6. Direction assistée électromécanique selon la revendication 5, **caractérisée en ce que** les perçages (29) sont réalisés au niveau du bord de pot.

7. Direction assistée électromécanique selon l'une quelconque des revendications précédentes, **caractérisée en ce que** des douilles coulissantes (28) pour recevoir les goupilles (26) sont prévues dans les évidements (27) dans le carter de boîte de vitesses (16).

8. Direction assistée électromécanique selon l'une quelconque des revendications précédentes, **caractérisée en ce que** la roue à dents hélicoïdes (12) est une roue hélicoïdale et l'arbre (10) est un arbre à vis sans fin.

9. Direction assistée électromécanique selon l'une quelconque des revendications précédentes, **caractérisée en ce que** la roue hélicoïdale (12) est en liaison active avec un arbre d'entrée d'un mécanisme de direction et la roue hélicoïdale (7) est disposée sur un arbre de direction.

10. Direction assistée électromécanique selon l'une quelconque des revendications précédentes, **caractérisée en ce que** l'accouplement (15) comprend au moins deux parties d'accouplement qui s'engrènent et sont respectivement reliées solidaires en rotation à l'arbre correspondant au moyen d'un coussinet.
